# FASCICULE DE BREVET EUROPEEN

(11) **EP 4 152 313 B1**
(45) Date de publication et mention de la délivrance du brevet: **07.01.2026**
(21) Numéro de dépôt: 22196392.9
(22) Date de dépôt: 19.09.2022
(51) Int. Cl.: G10K 11/172, B64C 1/40, F02K 1/82, B64D 33/02

(54) **PANNEAU DE TRAITEMENT ACOUSTIQUE COMPRENANT DES CELLULES ACOUSTIQUES DE DIFFÉRENTS VOLUMES OBTENUES À PARTIR DE TUBES PRINCIPAUX CYLINDRIQUES ET IDENTIQUES, AÉRONEF COMPRENANT UN TEL PANNEAU DE TRAITEMENT ACOUSTIQUE**
SCHALLBEHANDLUNGSPLATTE MIT AKUSTISCHEN ZELLEN UNTERSCHIEDLICHER VOLUMINA AUS ZYLINDRISCHEN UND IDENTISCHEN HAUPTRÖHREN, LUFTFAHRZEUG MIT EINER SOLCHEN SCHALLBEHANDLUNGSPLATTE
ACOUSTIC TREATMENT PANEL COMPRISING ACOUSTIC CELLS OF DIFFERENT VOLUMES OBTAINED FROM CYLINDRICAL AND IDENTICAL MAIN TUBES, AIRCRAFT COMPRISING SUCH AN ACOUSTIC TREATMENT PANEL

(30) Priorité: 20.09.2021 FR 2109841
(43) Date de publication de la demande: 22.03.2023
(73) Titulaire: AIRBUS OPERATIONS (S.A.S.), 31060 Toulouse (FR)
(72) Inventeur: MERCAT, Florent, 31060 TOIULOUSE (FR); RAVISE, Florian, 31060 TOULOUSE (FR)
(74) Mandataire: Fantin, Laurent

(56) Documents cités:
- WO-A2-2011/048323
- DE-B- 1 029 433
- FR-A1- 3 088 658
- US-A1- 2020 165 975
- US-B1- 6 569 509
- REDMANN DANIEL ET AL: "Aero-acoustic liner applications of the broadband special acoustic absorber concept", no. AIAA 2013-2176, 27 May 2013 (2013-05-27), pages 2626 - 2637, XP009515941, ISBN: 978-1-62410-213-4, Retrieved from the Internet <URL:http://arc.aiaa.org/doi/10.2514/6.2013-2176> [retrieved on 20130524], DOI: 10.2514/6.2013-2176

## Description

La présente demande se rapporte à un panneau de traitement acoustique comprenant des cellules acoustiques de différents volumes obtenues à partir de tubes principaux cylindriques et identiques ainsi qu'à un aéronef comprenant un tel panneau de traitement acoustique.

L'état de la technique est décrit par exemple dans le document US 6 569 509 B1.

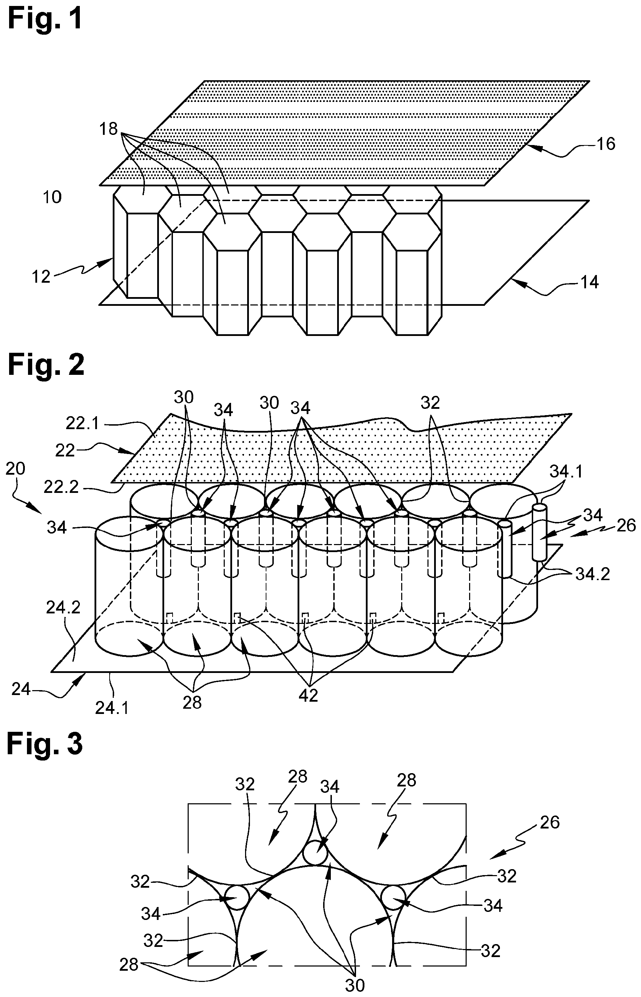

Selon un mode de réalisation dans l'art antérieur visible sur la figure 1, un panneau de traitement acoustique 10 comprend au moins une structure alvéolaire 12 positionnée entre une couche réflectrice 14 imperméable et une couche acoustiquement résistive 16 poreuse en contact avec un environnement extérieur dans lequel se propagent des ondes acoustiques. La structure alvéolaire 12 comprend une pluralité d'alvéoles, qui forment chacune une cellule acoustique approximativement étanche. En complément, la couche acoustiquement résistive 16 comprend une pluralité d'orifices traversants configurés pour faire communiquer l'environnement extérieur avec l'une les cellules acoustiques.

Selon une application, ce type de panneau est positionné dans une nacelle d'un aéronef pour atténuer les bruits provenant d'un turboréacteur.

Selon une configuration visible sur la figure 1, la structure alvéolaire 12 comprend des alvéoles 18 hexagonales juxtaposées les unes contre les autres, sans interstices entre elles. Ces alvéoles 18 ont toutes les mêmes dimensions.

Un tel panneau de traitement acoustique 10 permet une atténuation des ondes acoustiques sur une plage restreinte de fréquences, en fonction des dimensions des alvéoles 18 et plus particulièrement de la hauteur des alvéoles 18. A titre d'exemple, pour une hauteur donnée comprise entre 25 et 40 mm, le panneau de traitement acoustique permet une atténuation des ondes acoustiques sur une plage restreinte de fréquences, autour d'une fréquence élevée comprise entre 1000 Hz et 2000 Hz.

Ce mode de réalisation n'est pas satisfaisant car un tel panneau ne permet un traitement acoustique que sur une plage restreinte de fréquences.

La présente invention vise à remédier à tout ou partie des inconvénients de l'art antérieur.

A cet effet, l'invention a pour objet un panneau de traitement acoustique selon la revendication 1.

Ainsi, il est possible d'élargir la plage des fréquences atténuées par le panneau de traitement acoustique.

Selon une autre caractéristique, les tubes secondaires comprennent des tubes ouverts cylindriques et positionnés dans les zones intercalaires, chaque tube ouvert présentant une première extrémité ouverte et en contact avec la couche acoustiquement résistive ainsi qu'une deuxième extrémité ouverte et espacée de la couche réflectrice.

Selon une autre caractéristique, les tubes principaux ont un diamètre compris entre 10 et 20 mm et une hauteur comprise entre 25 et 40 mm. En complément, les tubes ouverts ont un diamètre compris entre 0,3 et 1 mm et une hauteur comprise entre 5 et 25 mm.

Selon une autre caractéristique, les tubes secondaires comprennent des tubes d'obturation cylindriques et positionnés dans les zones intercalaires, chaque tube d'obturation présentant au moins une extrémité fermée par une surface transversale plaquée contre la couche acoustiquement résistive.

Selon une autre caractéristique, la couche acoustiquement résistive présente des orifices traversants sur toute une zone située au droit d'au moins une zone intercalaire comprenant un tube ouvert, le nombre et les dimensions des tubes d'obturation positionnés dans la zone intercalaire étant déterminés de manière à ce que les orifices traversants situés dans la zone de la couche acoustiquement résistive située au droit de la zone intercalaire et décalée par rapport au tube ouvert soient obturés par la (ou les) surface(s) transversale(s) du (ou des) tube(s) d'obturation.

Selon une autre caractéristique, les tubes secondaires comprennent au moins un tube fermé cylindrique, obturé à chacune de ses extrémités et positionné dans un tube principal ou dans une zone intercalaire, le tube fermé présentant des dimensions déterminées en fonction du volume souhaité pour le tube principal ou la zone intercalaire dans lequel il est situé.

Selon une autre caractéristique, le tube fermé présente une extrémité plaquée contre la couche acoustiquement résistive ou la couche réflectrice.

Selon une autre caractéristique, les tubes secondaires comprennent au moins un tube résonateur cylindrique, positionné dans une zone intercalaire, présentant une première extrémité ouverte, reliée à la couche acoustiquement résistive ainsi qu'une deuxième extrémité obturée.

Selon une autre caractéristique, les tubes principaux sont agencés en quinconce selon plusieurs lignes, chaque tube principal étant relié par une découpe à une zone intercalaire. En complément, la couche acoustiquement résistive présente des orifices traversants uniquement au droit d'un tube principal sur deux pour chaque ligne.

Selon une autre caractéristique, les tubes principaux sont agencés en quinconce selon plusieurs lignes, la couche acoustiquement résistive présentant au moins un orifice traversant au droit de chaque zone intercalaire ainsi que des orifices traversants uniquement au droit d'un tube principal sur deux pour chaque ligne, au moins une zone intercalaire étant reliée par une découpe à un tube principal situé au droit d'orifices traversants de la couche acoustiquement résistive, au moins une zone intercalaire étant reliée par une découpe à un tube principal situé au droit d'une zone non perforée de la couche acoustiquement résistive, au moins une zone intercalaire ne communiquant avec aucun tube principal.

Selon une autre caractéristique, les tubes principaux sont agencés selon des lignes et des colonnes perpendiculaires aux lignes, la couche acoustiquement résistive comprenant des orifices traversants au droit de tous les tubes principaux de toutes les lignes paires et aucun au droit de tous les tubes principaux des lignes impaires. En complément, un tube ouvert est positionné dans chaque zone intercalaire, les découpes étant des rainures obliques permettant de faire communiquer successivement une zone intercalaire, un tube principal au droit duquel sont prévus des orifices traversants, une zone intercalaire et un tube principal au droit d'une zone non perforée de la couche acoustiquement résistive.

L'invention a également pour objet un aéronef comprenant au moins un panneau de traitement acoustique selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un panneau de traitement acoustique illustrant un mode de réalisation de l'art antérieur,
- La figure 2 est une vue en perspective d'un panneau de traitement acoustique illustrant un mode de réalisation de l'invention,
- La figure 3 est une vue de dessus d'une structure alvéolaire du panneau de traitement acoustique visible sur la figure 2,
- La figure 4 est une vue en perspective d'un panneau de traitement acoustique illustrant un autre mode de réalisation de l'invention,
- La figure 5 est une coupe d'un panneau de traitement acoustique illustrant un autre mode de réalisation de l'invention,
- La figure 6 est une vue en perspective d'un panneau de traitement acoustique illustrant un autre mode de réalisation de l'invention,
- La figure 7 est une vue en perspective d'un panneau de traitement acoustique illustrant un autre mode de réalisation de l'invention,
- La figure 8 est une vue de dessus d'un panneau de traitement acoustique illustrant un autre mode de réalisation de l'invention,
- La figure 9 est une vue de dessus d'un panneau de traitement acoustique illustrant un autre mode de réalisation de l'invention, et
- La figure 10 est une vue de dessus d'un panneau de traitement acoustique illustrant un autre mode de réalisation de l'invention.

Selon différents modes de réalisation visibles sur les figures 2 à 10, un panneau de traitement acoustique 20 comprend au moins une couche acoustiquement résistive 22 poreuse qui présente des première et deuxième faces 22.1, 22.2, la première face 22.1 étant en contact avec un environnement extérieur dans lequel se propagent des ondes acoustiques, une couche réflectrice 24 imperméable qui présente des première et deuxième faces 24.1, 24.2, la deuxième face 24.2 étant orientée vers la couche acoustiquement résistive 22, ainsi qu'au moins une structure alvéolaire 26 intercalée entre la couche acoustiquement résistive 22 et la couche réflectrice 24.

Selon une configuration, la couche acoustiquement résistive 22 et la couche réflectrice 24 sont parallèles entre elles. Pour simplifier les figures, ces deux couches 22 et 24 sont représentées planes. Généralement, elles sont courbes. Selon un mode opératoire, les différentes couches peuvent être réalisées à plat et être mises en forme avant ou après l'assemblage.

Pour la suite de la description, une première direction est une direction perpendiculaire à la couche acoustiquement résistive 22 et à la couche réflectrice 24.

La couche acoustiquement résistive 22 et la couche réflectrice 24 peuvent être métalliques ou en matériau composite. Chacune d'elles peut comprendre une ou plusieurs couches superposées.

La structure alvéolaire 26 comprend une pluralité de tubes principaux 28 présentant une première extrémité en contact avec la deuxième face 22.2 de la couche acoustiquement résistive 22 et reliée à cette dernière ainsi qu'une deuxième extrémité en contact avec la deuxième face 24.2 de la couche réflectrice 24 et reliée à cette dernière. Ainsi, chaque tube principal 28 est obturé au niveau de sa première extrémité par la couche acoustiquement résistive 22 et au niveau de sa deuxième extrémité par la couche réflectrice 24.

Les tubes principaux 28 sont alignés selon plusieurs lignes.

Selon un premier agencement visible sur les figures 2, 3, 8 et 9, les tubes principaux 28 des différentes lignes sont agencés en quinconce. Dans ce cas, les tubes principaux 28 sont chacun en contact avec six autres tubes principaux 28.

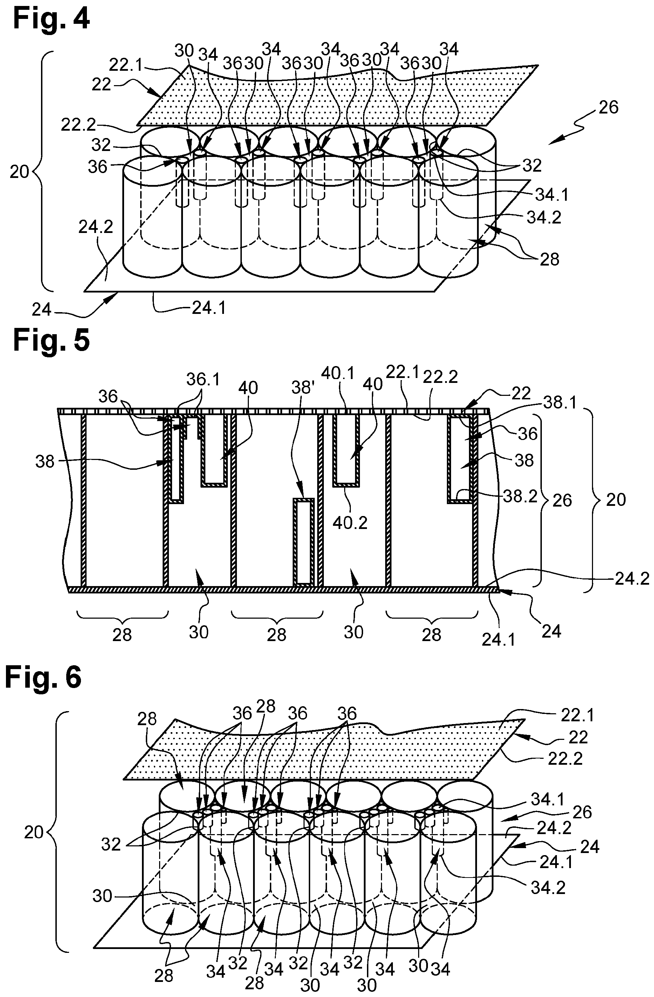

Selon un deuxième agencement visible sur les figures 4, 6, 7 et 10, les tubes principaux 28 ne sont pas agencés en quinconce et sont chacun en contact avec quatre autres tubes principaux 28.

Selon une configuration, chaque tube principal 28 est cylindrique et présente un axe perpendiculaire à la couche acoustiquement résistive 22 ou à la couche réflectrice 24. Les tubes principaux 28 ont tous le même diamètre compris entre 10 et 20 mm et la même hauteur comprise entre environ 25 à 40mm. A titre d'exemple, les tubes principaux 28 ont un diamètre de l'ordre de 10 mm. Dans ce cas, en fonction de leur hauteur (distance séparant leurs première et deuxième extrémités), ces tubes principaux 28 sont adaptés pour atténuer des ondes acoustiques présentant une fréquence comprise entre 1000 et 2000 Hz correspondant à une haute fréquence.

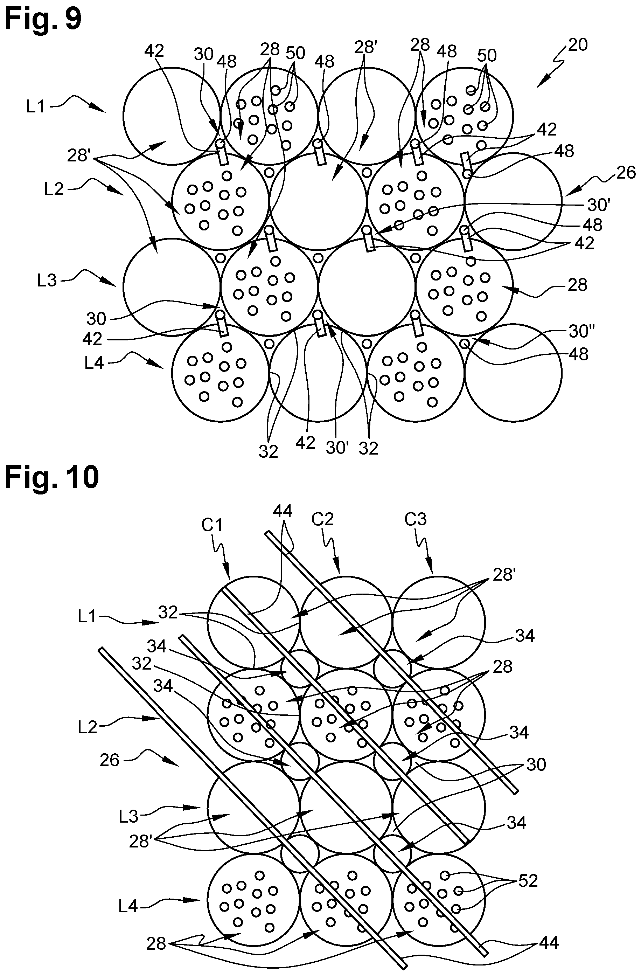

Quel que soit l'agencement des tubes principaux 28, la structure alvéolaire 26 présente des zones intercalaires 30 situées entres les tubes principaux 28 qui s'étendent entre la couche acoustiquement résistive 22 et la couche réflectrice 24. Chaque zone intercalaire 30 est délimitée par plusieurs tubes principaux 28 (trois ou quatre en fonction de l'agencement des tubes principaux 28) reliés deux à deux au niveau de zones de contact 32. Chaque zone de contact 32 est étanche et s'étend de la couche acoustiquement résistive 22 jusqu'à la couche réflectrice 24. Ainsi, les zones intercalaires 30 sont étanches et isolées les unes des autres. Les zones intercalaires 30 présentent chacune un volume variant en fonction de l'agencement des tubes principaux 28, ce volume étant le plus petit lorsque les tubes principaux 28 sont agencés en quinconce et le plus grand lorsqu'ils sont agencés selon des lignes et des colonnes perpendiculaires aux lignes, comme illustré sur la figure 10.

Selon un premier mode de réalisation visible par exemple sur les figures 2 et 3, la structure alvéolaire 26 comprend des tubes ouverts 34, positionnés dans les zones intercalaires 30, entre les tubes principaux 28. Ces tubes ouverts 34 sont cylindriques et présentent chacun un axe parallèle à la première direction ou perpendiculaire à la couche acoustiquement résistive 22 ou à la couche réflectrice 24. Les tubes ouverts 34 ont une hauteur (dimension prise parallèlement à la première direction) inférieure à la hauteur des tubes principaux 28. Les tubes ouverts 34 sont ouverts à chaque extrémité, une première extrémité 34.1 étant en contact avec la deuxième face 22.2 de la couche acoustiquement résistive 22 et reliée à cette dernière, une deuxième extrémité 34.2 étant espacée de la couche réflectrice 24.

Selon une configuration, les tubes ouverts 34 ont tous le même diamètre, compris entre 0,3 et 1 mm et une hauteur comprise entre 5 et 25 mm. Selon un agencement, chaque tube ouvert 34 présente un diamètre le plus important possible tout en lui permettant d'être positionné dans une zone intercalaire 30. Les tubes ouverts 34 peuvent tous avoir la même hauteur, supérieure à 5 mm, par exemple comprise entre 20 et 25 mm.

Selon ce deuxième mode de réalisation, la couche acoustiquement résistive 22 n'est perforée qu'au droit des tubes ouverts 34, dans les zones intercalaires 30. Ainsi, les tubes ouverts 34 ont une fonction d'entonnoir pour canaliser les ondes acoustiques dans les zones intercalaires 30 qui ont-elles une fonction de résonateur.

Selon des modes de réalisation visibles sur les figures 4 et 6, la couche acoustiquement résistive 22 présente des orifices traversants sur toute une zone située au droit d'au moins une zone intercalaire 30 comprenant un tube ouvert 34. Pour obturer ces orifices traversants, la structure acoustique résistive comprend des tubes d'obturation 36 positionnés dans la zone intercalaire 30, chaque tube d'obturation 36 présentant au moins une extrémité fermée par une surface transversale 36.1 plaquée contre la couche acoustiquement résistive 22. Ces tubes d'obturation 36 sont cylindriques et présentent des axes parallèles à la première direction ou perpendiculaires à la couche acoustiquement résistive 22 ou à la couche réflectrice 24.

Une zone intercalaire 30 peut comprendre un tube d'obturation 36, comme illustré sur la figure 4, ou plusieurs tubes d'obturation 36, comme illustré sur la figure 6. Pour au moins une zone intercalaire 30, le nombre et les dimensions des tubes d'obturation 36 sont déterminés de manière à ce que les orifices traversants situés dans la zone de la couche acoustiquement résistive 22 située au droit de la zone intercalaire 30 et décalée par rapport au tube ouvert 34 soient obturés par la (ou les) surface(s) transversale(s) 36.1 du (ou des) tube(s) d'obturation 36. Ainsi, la couche acoustiquement résistive 22 peut être perforée sur toute la zone située au droit des zones intercalaires 30.

Selon un mode de réalisation visible sur la figure 5, la structure alvéolaire 26 comprend au moins un tube fermé 38, 38' cylindrique, obturé à chacune de ses extrémités 38.1, 38.2 et positionné dans un tube principal 28 ou dans une zone intercalaire 30. Chaque tube fermé 38, 38' est configuré pour modifier le volume du tube principal 28 ou de la zone intercalaire 30 dans lequel il est situé. Le diamètre et la hauteur du tube fermé 38, 38' sont déterminés en fonction du volume souhaité pour le tube principal 28 ou la zone intercalaire 30.

Selon une configuration visible sur la figure 5, le tube fermé 38 est positionné dans une zone intercalaire 30 et présente une extrémité plaquée contre la couche acoustiquement résistive 22. Dans ce cas, en plus de modifier le volume de la zone intercalaire 30 dans laquelle il est situé, le tube fermé 38 assure la fonction de tube d'obturation 36.

Selon une configuration visible sur la figure 4, le tube fermé 38' présente une extrémité plaquée contre la couche réflectrice 24. Dans ce cas, en plus de modifier le volume du tube principal 28 ou de la zone intercalaire 30 dans lequel il est situé, le tube fermé 38 peut avoir une fonction structurale.

Selon un agencement, les tubes fermés 38, 38' ont des volumes différents les uns des autres pour faire varier les volumes des tubes principaux 28 et/ou des zones intercalaires 30.

Selon un mode de réalisation visible sur la figure 5, la structure alvéolaire 26 comprend au moins un tube résonateur 40 positionné dans une zone intercalaire 30, entre les tubes principaux 28. Ces tubes résonateurs 40 sont cylindriques et présentent chacun un axe parallèle à la première direction ou perpendiculaire à la couche acoustiquement résistive 22 ou à la couche réflectrice 24. Les tubes résonateurs 40 présentent une première extrémité 40.1 ouverte, en contact avec la deuxième face 22.2 de la couche acoustiquement résistive 22 et reliée à cette dernière ainsi qu'une deuxième extrémité 40.2 obturée et espacée de la couche réflectrice 24. Selon ce mode de réalisation, le tube résonateur 40 assure la fonction de résonateur d'Helmholtz. Le volume de chaque tube résonateur 40 est déterminé en fonction de la fréquence des ondes acoustiques à atténuer.

Selon d'autres modes de réalisation visibles sur les figures 2, 8 à 10, la structure alvéolaire 26 comprend des découpes 42, 44 réalisées au niveau de l'extrémité de certains tubes principaux 28 en contact avec la deuxième face 24.2 de la couche réflectrice 24 pour assurer la fonction de drainage.

Selon des modes de réalisation visibles sur les figures 2, 8 et 9, chaque découpe 42 relie uniquement un tube principal 28 et une zone intercalaire 30.

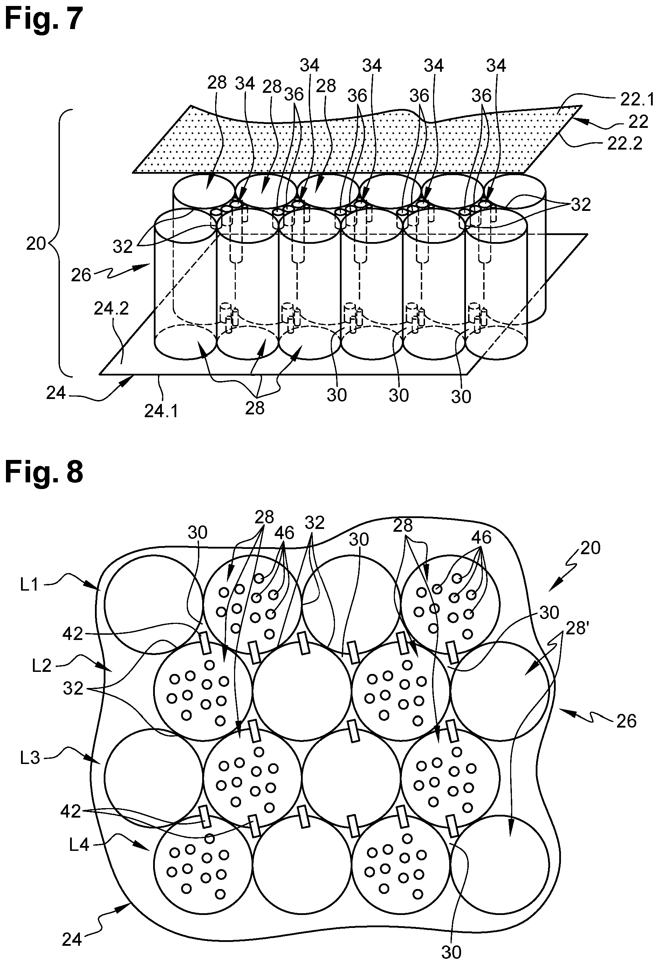

Selon un mode de réalisation visible sur la figure 8, chaque tube principal 28, 28' est relié par une découpe 42 à une zone intercalaire 30. Dans ce cas, le volume d'un résonateur correspond à la somme des volumes d'un tube principal 28, 28' et d'une zone intercalaire 30. Selon une configuration, la couche acoustiquement résistive 22 présente des orifices traversants 46 seulement au droit de certains tubes principaux 28. Les tubes principaux 28, 28' sont agencés en quinconce, selon plusieurs lignes L1 à L4, la couche acoustiquement résistive 22 présentant des orifices traversants 46 uniquement au droit d'un tube principal 28 sur deux pour chaque ligne L1 à L4.

A titre d'exemple, les tubes principaux 28 ont un diamètre de l'ordre de 10 mm et une hauteur de l'ordre de 25 mm. Les orifices traversants 46 sont configurés pour obtenir un taux de surface ouverte de l'ordre de 4%. Dans ce cas, les résonateurs formés par les tubes principaux 28, chacun associés à une zone intercalaire 30 permettent d'atténuer des ondes acoustiques ayant une fréquence d'environ 600 à 700 Hz.

Selon un autre mode de réalisation visible sur la figure 9, la couche acoustiquement résistive 22 présente au moins un orifice traversant 48 au droit de chaque zone intercalaire 30, 30', 30" et des orifices traversants 50 au droit de certains tubes principaux 28. La couche acoustiquement résistive 22 ne comprend aucun orifice traversant au droit de certains tubes principaux 28'. Selon une configuration, les tubes principaux 28, 28' sont agencés en quinconce selon plusieurs lignes L1 à L4, la couche acoustiquement résistive 22 présentant des orifices traversants 50 uniquement au droit d'un tube principal 28 sur deux pour chaque ligne L1 à L4.

La structure alvéolaire 26 comprend au moins une zone intercalaire 30 reliée par une découpe 42 à un tube principal 28 situé au droit d'orifices traversants 50 de la couche acoustiquement résistive 22, au moins une zone intercalaire 30' reliée par une découpe 42 à un tube principal 28' situé au droit d'une zone non perforée de la couche acoustiquement résistive 22 et au moins une zone intercalaire 30' qui ne communique avec aucun tube principal.

Selon ce mode de réalisation, la structure alvéolaire 26 comprend :
- des premiers résonateurs présentant chacun un volume égal à la somme des volumes d'une zone intercalaire 30 et d'un tube principal 28, la couche acoustiquement résistive 22 présentant des orifices traversants 50 au droit de la zone intercalaire 30 et du tube principal 28 de chaque premier résonateur ;
- des deuxièmes résonateurs présentant chacun un volume égal à la somme des volumes d'une zone intercalaire 30 et d'un tube principal 28', la couche acoustiquement résistive 22 présentant au moins un orifice traversant 50 au droit de la zone intercalaire 30 et aucun au droit du tube principal 28' de chaque deuxième résonateur ;
- des troisièmes résonateurs présentant chacun un volume égal à un volume d'une zone intercalaire 30.

A titre d'exemple, les tubes principaux 28, 28' ont un diamètre de l'ordre de 10 mm et une hauteur de l'ordre de 30 mm. Les orifices traversants 50 sont configurés pour obtenir un taux de surface ouverte de l'ordre de 4%. Dans ce cas, les résonateurs formés par les tubes principaux 28 permettent d'atténuer des ondes acoustiques ayant une fréquence d'environ 450 Hz.

Selon un autre mode de réalisation visible sur la figure 10, la structure alvéolaire 26 comprend plusieurs découpes 44 sous forme de rainures.

Selon un agencement, les tubes principaux 28 sont agencés selon des lignes L1 à L4 et des colonnes C1 à C3 perpendiculaires aux lignes L1 à L4. La structure alvéolaire 26 comprend un tube ouvert 34 dans chaque zone intercalaire 30. La couche acoustiquement résistive 22 comprend des orifices traversants 52 au droit de tous les tubes principaux 28 de toutes les lignes paires L2, L4 et aucun au droit de tous les tubes principaux 28' des lignes impaires L1, L3.

Les rainures 44 sont orientées de manière oblique par rapport aux lignes L1 à L4 ou aux colonnes C1 à C3 et permettent de faire communiquer successivement une zone intercalaire 30, un tube principal 28 au droit duquel sont prévus des orifices traversants 52, une zone intercalaire 30 et un tube principal 28' au droit d'une zone non perforée de la couche acoustiquement résistive 22.

A titre d'exemple, les tubes principaux 28 ont un diamètre de l'ordre de 10 mm et une hauteur de l'ordre de 30 mm. Les tubes ouverts 34 ont un diamètre de l'ordre de 4 mm. Les orifices traversants 52 sont configurés pour obtenir un taux de surface ouverte de l'ordre de 4%. Dans ce cas, les résonateurs formés par les tubes principaux 28 permettent d'atténuer des ondes acoustiques ayant une fréquence d'environ 700 Hz.

Bien entendu, l'invention n'est pas limitée aux modes de réalisation indiqués ci-dessus. Ainsi, la structure alvéolaire 26 peut comprendre au moins une combinaison de tubes principaux 28, de découpes 42, 44 et de tubes secondaires parmi les tubes ouverts 34, les tubes résonateurs 40, les tubes d'obturation 36 ainsi que les tubes fermés 38 positionnés dans les tubes principaux 28 et/ou dans les zones intercalaires 30. De plus, la structure alvéolaire 26 peut comprendre une première combinaison de ces éléments dans une zone donnée permettant d'atténuer des ondes acoustiques d'une première fréquence et au moins une autre combinaison de ces éléments dans au moins une autre zone permettant d'atténuer des ondes acoustiques d'une deuxième fréquence.

Quel que soit le mode de réalisation, la structure alvéolaire 26 comprend des tubes principaux 28 cylindriques qui présentent une première extrémité fermée par la couche acoustiquement résistive 22 ainsi qu'une deuxième extrémité fermée par la couche réflectrice 24, les tubes principaux 28 étant agencés selon plusieurs lignes et en contact entre eux de manière à délimiter entre eux des zones intercalaires 30 étanches entre elles. En complément, la structure alvéolaire 26 comprend des découpes 42, 44 reliant chacun au moins un tube principal 28 et au moins une zone intercalaire 30 ainsi que des tubes secondaires parmi les tubes ouverts 34, les tubes résonateurs 40, les tubes d'obturation 36 ou les tubes fermés 38 positionnés dans les tubes principaux 28 et/ou dans les zones intercalaires 30, les découpes 42, 44 et/ou les tubes secondaires étant configurés pour générer des cellules acoustiques de dimensions différentes à partir de tubes principaux 28 identiques. Ainsi, il est possible d'élargir la plage des fréquences atténuées par le panneau de traitement acoustique 20.

Selon une application non limitative, un aéronef comprend au moins un panneau de traitement acoustique 20 selon l'invention, par exemple positionné dans la nacelle d'un ensemble de propulsion.

## Revendications

1. Panneau de traitement acoustique comprenant au moins une couche acoustiquement résistive (22) poreuse, une couche réflectrice (24) imperméable ainsi qu'au moins une structure alvéolaire (26) intercalée entre la couche acoustiquement résistive (22) et la couche réflectrice (24), la structure alvéolaire (26) comprenant des tubes principaux (28) cylindriques et identiques qui présentent une première extrémité fermée par la couche acoustiquement résistive (22) ainsi qu'une deuxième extrémité fermée par la couche réflectrice (24), les tubes principaux (28) étant agencés de manière à délimiter entre eux des zones intercalaires (30) étanches entre elles, chaque zone intercalaire (30) étant délimitée par plusieurs tubes principaux (28) reliés deux à deux au niveau de zones de contact (32), **caractérisé en ce que** la structure alvéolaire (26) comprend :
- des tubes secondaires positionnés dans les zones intercalaires (30) ou dans les tubes principaux (28) et les zones intercalaires (30),
- les tubes secondaires étant configurés pour générer des cellules acoustiques de dimensions différentes à partir de tubes principaux (28) identiques.

2. Panneau de traitement acoustique selon la revendication précédente, **caractérisé en ce que** les tubes secondaires comprennent des tubes ouverts (34) cylindriques et positionnés dans les zones intercalaires (30), chaque tube ouvert (34) présentant une première extrémité (34.1) ouverte et en contact avec la couche acoustiquement résistive (22) ainsi qu'une deuxième extrémité (34.2) ouverte et espacée de la couche réflectrice (24).

3. Panneau de traitement acoustique selon la revendication précédente, **caractérisé en ce que** les tubes principaux (28) ont un diamètre compris entre 10 et 20 mm et une hauteur comprise entre 25 et 40 mm et **en ce que** les tubes ouverts (34) ont un diamètre compris entre 0,3 et 1 mm et une hauteur comprise entre 5 et 25 mm.

4. Panneau de traitement acoustique selon l'une des revendications précédentes, **caractérisé en ce que** les tubes secondaires comprennent des tubes d'obturation (36) cylindriques et positionnés dans les zones intercalaires (30), chaque tube d'obturation (36) présentant au moins une extrémité fermée par une surface transversale (36.1) plaquée contre la couche acoustiquement résistive (22).

5. Panneau de traitement acoustique selon les revendications 2 et 4, **caractérisé en ce que** la couche acoustiquement résistive (22) présente des orifices traversants sur toute une zone située au droit d'au moins une zone intercalaire (30) comprenant un tube ouvert (34) et **en ce que** le nombre et les dimensions des tubes d'obturation (36) positionnés dans la zone intercalaire (30) sont déterminés de manière à ce que les orifices traversants situés dans la zone de la couche acoustiquement résistive (22) située au droit de la zone intercalaire (30) et décalée par rapport au tube ouvert (34) soient obturés par la (ou les) surface(s) transversale(s) (36.1) du (ou des) tube(s) d'obturation (36).

6. Panneau de traitement acoustique selon l'une des revendications précédentes, **caractérisé en ce que** les tubes secondaires comprennent au moins un tube fermé (38, 38') cylindrique, obturé à chacune de ses extrémités (38.1, 38.2) et positionné dans un tube principal (28) ou dans une zone intercalaire (30), le tube fermé (38, 38') présentant des dimensions déterminées en fonction du volume souhaité pour le tube principal (28) ou la zone intercalaire (30) dans lequel il est situé.

7. Panneau de traitement acoustique selon la revendication précédente, **caractérisé en ce que** le tube fermé (38, 38') présente une extrémité plaquée contre la couche acoustiquement résistive (22) ou la couche réflectrice (24).

8. Panneau de traitement acoustique selon l'une des revendications précédentes, **caractérisé en ce que** les tubes secondaires comprennent au moins un tube résonateur (40) cylindrique, positionné dans une zone intercalaire (30), présentant une première extrémité (40.1) ouverte et reliée à la couche acoustiquement résistive (22) ainsi qu'une deuxième extrémité (40.2) obturée.

9. Panneau de traitement acoustique selon l'une des revendications précédentes, **caractérisé en ce que** la structure alvéolaire (26) comprend des découpes (42, 44) réalisées au niveau d'une extrémité de certains tubes principaux (28) en contact avec la couche réflectrice (24) et configurées pour générer des cellules acoustiques de dimensions différentes à partir de tubes principaux (28) identiques.

10. Panneau de traitement acoustique selon la revendication précédente, **caractérisé en ce que** chaque tube principal (28, 28') est relié par une découpe (42) à une zone intercalaire (30), **en ce que** les tubes principaux (28, 28') sont agencés en quinconce selon plusieurs lignes (L1 à L4) et en ce la couche acoustiquement résistive (22) présente des orifices traversants (46) uniquement au droit d'un tube principal (28) sur deux pour chaque ligne (L1 à L4).

11. Panneau de traitement acoustique selon la revendication 9, **caractérisé en ce que** les tubes principaux (28, 28') sont agencés en quinconce selon plusieurs lignes (L1 à L4) et **en ce que** la couche acoustiquement résistive (22) présente au moins un orifice traversant (48) au droit de chaque zone intercalaire (30, 30', 30") ainsi que des orifices traversants (50) uniquement au droit d'un tube principal (28) sur deux pour chaque ligne (L1 à L4), au moins une zone intercalaire (30) étant reliée par une découpe (42) à un tube principal (28) situé au droit d'orifices traversants (50) de la couche acoustiquement résistive (22), au moins une zone intercalaire (30') étant reliée par une découpe (42) à un tube principal (28') situé au droit d'une zone non perforée de la couche acoustiquement résistive (22), au moins une zone intercalaire (30') ne communiquant avec aucun tube principal.

12. Panneau de traitement acoustique selon la revendication 9, **caractérisé en ce que** les tubes principaux (28) sont agencés selon des lignes (L1 à L4) et des colonnes (C1 à C3) perpendiculaires aux lignes (L1 à L4), **en ce que** la couche acoustiquement résistive (22) comprend des orifices traversants (52) au droit de tous les tubes principaux (28) de toutes les lignes paires (L2, L4) et aucun au droit de tous les tubes principaux (28') des lignes impaires (L1, L3), **en ce qu'**un tube ouvert (34) est positionné dans chaque zone intercalaire (30) et **en ce que** les découpes (44) sont des rainures obliques permettant de faire communiquer successivement une zone intercalaire (30), un tube principal (28) au droit duquel sont prévus des orifices traversants (52), une zone intercalaire (30) et un tube principal (28') au droit d'une zone non perforée de la couche acoustiquement résistive (22).

13. Aéronef comprenant au moins un panneau de traitement acoustique selon l'une des revendications précédentes.

## Patentansprüche

1. Schallbehandlungsplatte mit wenigstens einer porösen schalldämpfenden Schicht (22), einer undurchlässigen reflektierenden Schicht (24) sowie wenigstens einer zwischen der schalldämpfenden Schicht (22) und der reflektierenden Schicht (24) eingefügten Wabenstruktur (26), wobei die Wabenstruktur (26) zylindrische und identische Hauptrohre (28) umfasst, die ein durch die schalldämpfende Schicht (22) verschlossenes erstes Ende sowie ein durch die reflektierende Schicht (24) verschlossenes zweites Ende aufweisen, wobei die Hauptrohre (28) so angeordnet sind, dass sie zwischen sich voneinander abgedichtete Zwischenzonen (30) begrenzen, wobei jede Zwischenzone (30) von mehreren Hauptrohren (28) begrenzt wird, die paarweise an Kontaktzonen (32) miteinander verbunden sind, **dadurch gekennzeichnet, dass** die Wabenstruktur (26) umfasst:
- Nebenrohre, die in den Zwischenzonen (30) oder in den Hauptrohren (28) und den Zwischenzonen (30) angeordnet sind,
- wobei die Nebenrohre so eingerichtet sind, dass sie aus identischen Hauptrohren (28) akustische Zellen mit unterschiedlichen Abmessungen erzeugen.

2. Schallbehandlungsplatte nach dem vorhergehenden Anspruch, **dadurch gekennzeichnet, dass** die Nebenrohre zylindrische und in den Zwischenzonen (30) angeordnete offene Rohre (34) umfassen, wobei jedes offene Rohr (34) ein erstes offenes Ende (34.1) aufweist, das mit der schalldämpfenden Schicht (22) in Kontakt steht, sowie ein zweites offenes Ende (34.2), das von der reflektierenden Schicht (24) beabstandet ist.

3. Schallbehandlungsplatte nach dem vorhergehenden Anspruch, **dadurch gekennzeichnet, dass** die Hauptrohre (28) einen Durchmesser von 10 bis 20 mm und eine Höhe von 25 bis 40 mm haben und dass die offenen Rohre (34) einen Durchmesser von 0,3 bis 1 mm und eine Höhe von 5 bis 25 mm haben.

4. Schallbehandlungsplatte nach einem der vorhergehenden Ansprüche, **dadurch gekennzeichnet, dass** die Nebenrohre zylindrische und in den Zwischenzonen (30) angeordnete Verschlussrohre (36) umfassen, wobei jedes Verschlussrohr (36) wenigstens ein Ende aufweist, das durch eine Querschnittsfläche (36.1) geschlossen ist, die gegen die schalldämpfende Schicht (22) angesetzt ist.

5. Schallbehandlungsplatte nach den Ansprüchen 2 und 4, **dadurch gekennzeichnet, dass** die schalldämpfende Schicht (22) Durchgangsöffnungen in einer gesamten Zone aufweist, die wenigstens einer Zwischenzone (30) gegenüberliegt, die ein offenes Rohr (34) umfasst, und dass die Anzahl und die Abmessungen der Verschlussrohre (36), die in der Zwischenzone (30) angeordnet sind, so gewählt sind, dass die Durchgangsöffnungen, die in der Zone der schalldämpfenden Schicht (22) gegenüber der Zwischenzone (30) liegen und gegenüber dem offenen Rohr (34) versetzt sind, durch die Querfläche(n) (36.1) des (oder der) Verschlussrohr(e) (36) verschlossen sind.

6. Schallbehandlungsplatte nach einem der vorhergehenden Ansprüche, **dadurch gekennzeichnet, dass** die Nebenrohre wenigstens ein zylindrisches geschlossenes Rohr (38, 38') umfassen, das an jedem seiner Enden (38.1, 38.2) verschlossen und in einem Hauptrohr (28) oder in einer Zwischenzone (30) angeordnet ist, wobei das geschlossene Rohr (38, 38') Abmessungen aufweist, die in Abhängigkeit vom gewünschten Volumen für das Hauptrohr (28) oder der Zwischenzone (30), in der es sich befindet, bestimmt sind.

7. Schallbehandlungsplatte nach dem vorhergehenden Anspruch, **dadurch gekennzeichnet, dass** das geschlossene Rohr (38, 38') ein Ende aufweist, das gegen die schalldämpfende Schicht (22) oder die reflektierende Schicht (24) angesetzt ist.

8. Schallbehandlungsplatte nach einem der vorhergehenden Ansprüche, **dadurch gekennzeichnet, dass** die Nebenrohre wenigstens ein zylindrisches Resonatorrohr (40) umfassen, das in einer Zwischenzone (30) angeordnet ist und ein erstes offenes Ende (40.1), das mit der schalldämpfenden Schicht (22) verbunden ist, sowie ein zweites geschlossenes Ende (40.2) aufweist.

9. Schallbehandlungsplatte nach einem der vorhergehenden Ansprüche, **dadurch gekennzeichnet, dass** die Wabenstruktur (26) Ausnehmungen (42, 44) aufweist, die im Bereich eines Endes bestimmter Hauptrohre (28) in Kontakt mit der reflektierenden Schicht (24) ausgebildet und so eingerichtet sind, dass sie aus identischen Hauptrohren (28) akustische Zellen mit unterschiedlichen Abmessungen erzeugen.

10. Schallbehandlungsplatte nach dem vorhergehenden Anspruch, **dadurch gekennzeichnet, dass** jedes Hauptrohr (28, 28') durch eine Ausnehmung (42) mit einer Zwischenzone (30) verbunden ist, dass die Hauptrohre (28, 28') in mehreren Zeilen (L1 bis L4) versetzt angeordnet sind und dass die schalldämpfende Schicht (22) für jede Zeile (L1 bis L4) nur gegenüber einem von zwei Hauptrohren (28) Durchgangsöffnungen (46) aufweist.

11. Schallbehandlungsplatte nach Anspruch 9, **dadurch gekennzeichnet, dass** die Hauptrohre (28, 28') versetzt entlang mehreren Zeilen (L1 bis L4) angeordnet sind und dass die schalldämpfende Schicht (22) wenigstens eine Durchgangsöffnung (48) gegenüber jeder Zwischenzone (30, 30', 30") sowie für jede Zeile (L1 bis L4) Durchgangsöffnungen (50) nur gegenüber von einem von zwei Hauptrohren (28) aufweist, wobei wenigstens eine Zwischenzone (30) durch eine Ausnehmung (42) mit einem Hauptrohr (28) verbunden ist, das sich gegenüber Durchgangsöffnungen (50) der schalldämpfenden Schicht (22) befindet, und wobei wenigstens eine Zwischenzone (30') durch eine Ausnehmung (42) mit einem Hauptrohr (28') verbunden ist, das sich gegenüber einem nicht perforierten Bereich der schalldämpfenden Schicht (22) befindet, wobei wenigstens eine Zwischenzone (30') mit keinem Hauptrohr in Verbindung steht.

12. Schallbehandlungsplatte nach Anspruch 9, **dadurch gekennzeichnet, dass** die Hauptrohre (28) in Zeilen (L1 bis L4) und Spalten (C1 bis C3) im rechten Winkel zu den Zeilen (L1 bis L4) angeordnet sind, dass die schalldämpfende Schicht (22) Durchgangsöffnungen (52) gegenüber allen Hauptrohren (28) aller geraden Zeilen (L2, L4) und keine gegenüber allen Hauptrohren (28') der ungeraden Zeilen (L1, L3) aufweist, dass ein offenes Rohr (34) in jeder Zwischenzone (30) angeordnet ist und dass die Ausnehmungen (44) schräge Nuten sind, die es ermöglichen, nacheinander eine Zwischenzone (30), ein Hauptrohr (28), dem gegenüber Durchgangsöffnungen (52) vorgesehen sind, eine Zwischenzone (30) und ein Hauptrohr (28') in einem nicht perforierten Bereich der schalldämpfenden Schicht (22) miteinander zu verbinden.

13. Luftfahrzeug mit wenigstens einer Schallbehandlungsplatte nach einem der vorhergehenden Ansprüche.

## Claims

1. Acoustic treatment panel comprising at least one porous acoustically resistive layer (22), an impermeable reflective layer (24) and at least one cellular structure (26) interposed between the acoustically resistive layer (22) and the reflective layer (24), wherein the cellular structure (26) comprises cylindrical and identical main tubes (28) which have a first end closed by the acoustically resistive layer (22) and a second end closed by the reflective layer (24), the main tubes (28) being arranged so as to delimit between them spacer zones (30) which are sealed relative to one another, each spacer zone (30) being delimited by several main tubes (28) connected in pairs at contact zones (32), **characterized in that** the cellular structure (26) comprises:
- secondary tubes positioned in the spacer zones (30) or in the main tubes (28) and the spacer zones (30),
- the secondary tubes being configured to generate acoustic cells of different dimensions from identical main tubes (28).

2. Acoustic treatment panel as claimed in the preceding claim, wherein the secondary tubes comprise cylindrical open tubes (34) positioned in the spacer zones (30), each open tube (34) having a first open end (34.1) in contact with the acoustically resistive layer (22) and a second open end (34.2) spaced apart from the reflective layer (24).

3. Acoustic treatment panel as claimed in the preceding claim, wherein the main tubes (28) have a diameter of between 10 and 20 mm and a height of between 25 and 40 mm, and wherein the open tubes (34) have a diameter of between 0.3 and 1 mm and a height of between 5 and 25 mm.

4. Acoustic treatment panel as claimed in one of the preceding claims, wherein the secondary tubes comprise cylindrical closure tubes (36) positioned in the spacer zones (30), each closure tube (36) having at least one end closed by a transverse surface (36.1) pressed against the acoustically resistive layer (22).

5. Acoustic treatment panel as claimed in claims 2 and 4, wherein the acoustically resistive layer (22) has through-orifices over an entire zone situated in line with at least one spacer zone (30) comprising an open tube (34), and wherein the number and dimensions of the closure tubes (36) positioned in the spacer zone (30) are determined in such a way that the through-orifices situated in that zone of the acoustically resistive layer (22) which is situated in line with the spacer zone (30) and which is offset with respect to the open tube (34) are closed off by the transverse surface or surfaces (36.1) of the closure tube or tubes (36).

6. Acoustic treatment panel as claimed in one of the preceding claims, wherein the secondary tubes comprise at least one cylindrical closed tube (38, 38') which is closed off at each of its ends (38.1, 38.2) and which is positioned in a main tube (28) or in a spacer zone (30), the closed tube (38, 38') having dimensions determined as a function of the volume desired for the main tube (28) or the spacer zone (30) in which it is situated.

7. Acoustic treatment panel as claimed in the preceding claim, wherein the closed tube (38, 38') has an end pressed against the acoustically resistive layer (22) or the reflective layer (24).

8. Acoustic treatment panel as claimed in one of the preceding claims, wherein the secondary tubes comprise at least one cylindrical resonator tube (40) which is positioned in a spacer zone (30) and which has an open first end (40.1), connected to the acoustically resistive layer (22), and a closed-off second end (40.2).

9. Acoustic treatment panel as claimed in one of the preceding claims, wherein the cellular structure (26) comprises cutouts (42, 44) made at an end of certain main tubes (28), in contact with the reflective layer (24)and configured to generate acoustic cells of different dimensions from identical main tubes (28).

10. Acoustic treatment panel as claimed in the preceding claim, wherein each main tube (28, 28') is connected by a cutout (42) to a spacer zone (30), wherein the main tubes (28, 28') are arranged in alternating fashion in several rows (L1 to L4), and wherein the acoustically resistive layer (22) has through-orifices (46) solely in line with one out of every two main tubes (28) for each row (L1 to L4).

11. Acoustic treatment panel as claimed in the claim 9, wherein the main tubes (28, 28') are arranged in alternating fashion in several rows (L1 to L4), and wherein the acoustically resistive layer (22) has at least one through-orifice (48) in line with each spacer zone (30, 30', 30") and through-orifices (50) solely in line with one out of every two main tubes (28) for each row (L1 to L4), at least one spacer zone (30) being connected by a cutout (42) to a main tube (28) situated in line with through-orifices (50) of the acoustically resistive layer (22), at least one spacer zone (30') being connected by a cutout (42) to a main tube (28') situated in line with a non-perforated zone of the acoustically resistive layer (22), at least one spacer zone (30") not communicating with any main tubes.

12. Acoustic treatment panel as claimed in the claim 9, wherein the main tubes (28) are arranged in rows (L1 to L4) and columns (C1 to C3) perpendicular to the rows (L1 to L4), wherein the acoustically resistive layer (22) comprises through-orifices (52) in line with all of the main tubes (28) of all of the even-numbered rows (L2, L4) and none in line with any of the main tubes (28') of the odd-numbered rows (L1, L3), wherein an open tube (34) is positioned in each spacer zone (30), and wherein the cutouts (44) are oblique grooves allowing a spacer zone (30), a main tube (28) in line with which through-orifices (52) are provided, a spacer zone (30) and a main tube (28') in line with a non-perforated zone of the acoustically resistive layer (22) to communicate successively.

13. Aircraft comprising at least one acoustic treatment panel as claimed in one of the preceding claims.
